# EUROPÄISCHE PATENTSCHRIFT

(11) **EP 2 128 035 B1**
(45) Veröffentlichungstag und Bekanntmachung des Hinweises auf die Patenterteilung: **25.04.2012**
(21) Anmeldenummer: 09007108.5
(22) Anmeldetag: 28.05.2009
(51) Int. Cl.: B65D 6/18

(54) **Verschlussriegel für Transportbehälter mit klappbaren Seitenwänden**
Locking latch for transport containers with collapsible side walls
Verrou pour récipients de transport dotés de parois latérales repliables

(30) Priorität: 28.05.2008 AT 8622008
(43) Veröffentlichungstag der Anmeldung: 02.12.2009
(60) Teilanmeldung: 11167371.1
(73) Patentinhaber: IFCO Systems Austria GmbH, 4812 Pinsdorf (AT)
(72) Erfinder: Orgeldinger, Wolfgang, 81539 München (DE)
(74) Vertreter: Zimmermann, Tankred Klaus

(56) Entgegenhaltungen:
- DE-A1- 10 137 328
- JP-A- 2002 347 760
- US-A1- 2003 006 232
- US-A1- 2005 098 557

## Beschreibung

Die Erfindung betrifft eine Vorrichtung zum Öffnen und Verriegeln von klappbaren Seitenwänden eines Transport- und Lagerbehälters, insbesondere Mehrwegbehälters, sowie einen Transport- und Lagerbehälter selbst, insbesondere Mehrwegbehälter, mit vier auf den Behälterboden klappbaren Seitenwänden, wobei zwei gegenüberliegende Seitenwände, insbesondere Schmalseitenwände, durch Rastnasen lösbar mit den beiden anderen Seitenwänden, insbesondere Längsseitenwänden, verriegelbar sind, indem die Rastnasen in entsprechende Rasthaken an den beiden anderen Seitenwänden eingreifen, wobei für die Verriegelungs- und Entriegelungsbewegung ein Stellmechanismus angeordnet ist, der die Interaktion zwischen Rastnase und Rasthaken derart löst, dass die entsprechende Seitenwand entriegelt und nach innen klappbar ist.

Derartige Behälter bzw. Kästen mit klappbaren Seitenwänden aus Kunststoff sind bekannt und sie werden vielfältig für den Transport von Gegenständen sowohl privat als auch im Handel im Lager- und Transportwesen verwendet. Hierbei sind eine Vielzahl unterschiedlicher Ausgestaltungen von klappbaren Behältern bekannt, wobei die Seitenwände teils durch Klappscharniere am Behälterboden angelenkt sind oder teils durch Filmscharniere einstückig am Behälterboden angeformt sind. Allen Behältern mit klappbaren Seitenwänden ist gemeinsam, dass die klappbaren Seitenwände an ihrem oberen Rand miteinander lösbar verriegelt sind.

Hiezu sind häufig Verriegelungsnasen an der schmalen Seitenwand des Behälters vorgesehen bzw. angeformt, die in Schnappeingriff mit entsprechenden Rasthaken der Längsseitenwände beim Hochklappen der Seitenwände gelangen. Häufig ist allerdings die Entriegelung schwierig und mühsam, weil die Rastnasen aus der Raststellung mit den Rasthaken mit hoher Kraft herausgedrückt werden müssen. Hierzu sind die Rastnasen und Rasthaken häufig flexibel ausgebildet, wobei aber gleichwohl das Verriegeln und Entriegeln zu einem Bruch der Rastnasen bzw. der Rasthaken führen kann.

Solche Behältnisse sind beispielsweise aus der US 7,195,128 B2 bekannt. Hier wird ein faltbarer Behälter mit vier Seitenwänden und einer Bodenplatte beschrieben, die über Gelenke miteinander verbunden sind. Durch einen nach oben zu bewegenden Hebel werden die Verriegelungselemente betätigt und es wird eine vertikale Bewegungsrichtung der in die Längswände eingreifenden Verriegelungselemente beschrieben.

Ferner wird in der DE 101 37 328 B4 eine Vorrichtung zum Öffnen und Verriegeln von klappbaren Seitenwänden von Kästen und Behältern, insbesondere Mehrwegbehältern mit vier auf den Behälterboden klappbaren Seitenwänden beschrieben. Die Schmalseitenwände werden durch Rastnasen lösbar mit den beiden Längsseitenwänden verriegelt. Ein federnd vorgespannter Stellmechanismus weist ein Betätigungsteil auf, das durch eine Hubbewegung parallel zur Seitenwand die Rastnase ausrückt, sodass die Seitenwände entriegelt werden und nach innen klappbar sind. Hier sind die Rastnasen an den freien Enden des einteiligen und bügelartig ausgebildeten Stellglieds angeformt, welches sich im wesentlichen über die Länge der Seitenwand erstreckt und als lang gestreckte Leiste ausgebildet ist und an den Außenflächen der entsprechenden Seitenwand angeordnet ist. Zudem ist das Stellglied in Ausnehmungen von vertikalen Versteifungsrippen an der Außenfläche der Seitenwand gehalten und für die Hubbewegung geführt.

US 2005/098557 A1 beschreibt eine Vorrichtung entsprechend dem Oberbegriff des Anspruchs 1.

US 2003/006232 A1 beschreibt einen Verriegelungsmechanismus um eine feltbare Kiste zu entriegeln und zusammenzufalten.

Aufgabe der vorliegenden Erfindung ist es einen Ver- und Entriegelungsmechanismus zur Verfügung zu stellen, wobei durch Aufwendung minimaler Kraft die Seitenwände nach innen klappbar sind.

Diese Aufgabe wird durch eine Vorrichtung nach Anspruch 1 gelöst.

Die vorliegende Erfindung schafft eine Vorrichtung zum Öffnen und Verriegeln von klappbaren Seitenwänden eines Transport- und Lagerbehälters, insbesondere Mehrwegbehälter wobei für die Verriegelungs- und Entriegelungsbewegung ein Stellmechanismus angeordnet ist, der ein Betätigungs- und ein Verriegelungselement umfasst, die miteinander verbunden sind, womit eine vertikale Bewegung des Betätigungselementes in eine Dreh- bzw. eine Schwenkbewegung des Verriegelungselementes umgewandelt wird um die Seitenwände zu entriegeln sowie einem Transport- und Lagerbehälter, insbesondere Mehrwegbehälter, mit einer erfindungsgemäßen Vorrichtung zum Ent- und Verriegeln der Seitenwände. Vorteilhaft dabei erweist sich, dass durch Druck auf das Betätigungselement nach unten das Betätigungselement selbst nach unten verschoben wird und dabei das an das Betätigungselement verbundene Verriegelungselement über einen Drehpunkt bewegt wird. Mit dieser Druckbewegung werden die am Verriegelungselement angeformten Rastnasen aus ihrer Eingriffsstellung mit den Rasthaken an den angrenzenden Längsseitenwänden ausgehoben, so dass die derart gestalteten Schmalseitenwände dann nach innen geklappt werden können.

In einer Weiterbildung ist vorgesehen, dass der Stellmechanismus, insbesondere das Betätigungselement, über eine Pilz-Schlitzverbindung mit der Seitenwand, insbesondere Schmalseitenwand verbunden ist, wodurch eine Parallelverschiebung des Bestätigungselementes zur Seitenwand ausgeübt werden kann und dadurch das damit verbundene Verriegelungselement über den Drehpunkt ebenfalls bewegt wird.

Weiters ist vorgesehen, dass das Betätigungselement ein Rückstellelement, insbesondere eine Rückstellfeder aufweist, die eine Rückführung des Betätigungselementes in die Ausgangsposition bewirkt, sodass ein gewisses Ausmaß an Kraft, vorzugsweise in Form von Druck, zum Zwecke des Entriegelns ausgeübt werden muss.

Das Betätigungselement interagiert über einen Drehpunkt mit dem Verriegelungselement, wodurch die vertikale Bewegung des Betätigungselements in eine Dreh- bzw. Schwenkbewegung des Verriegelungselements umgewandelt wird.

Der Drehpunkt des Betätigungselements ist durch eine Ausnehmung im Betätigungselement ausgebildet und interagiert dadurch mit einem Zapfen des Verriegelungselements.

Weiters kann das Betätigungselement eine Freistellung für die Aufnahme einer Ausbuchtung der Seitenwand aufweisen, wodurch die Parallelbewegung des Betätigungselements zur Seitenwand, insbesondere Schmalseitenwand, ohne einen durch die Seitenwand verursachten Widerstand durchgeführt werden kann.

Um die Parallelführung des Betätigungselements zur Seitenwand sicher zu stellen, kann ein weiterer Zapfen am Betätigungselement angeordnet sein.

Weiters ist vorgesehen, dass das Verriegelungselement zumindest einen Zapfen zur Interaktion mit der Seitenwand aufweist, womit das Verriegelungselement über einen Zapfen sowohl mit dem Betätigungselement verbunden ist als auch über einen anderen Zapfen mit der Seitenwand interagiert.

Auch das Verriegelungselement kann eine Freistellung für die Aufnahme einer Ausbuchtung der Seitenwand aufweisen.

Um eine Rückführung des Verriegelungselementes in die Ausgangsposition zu erzielen, kann das Verriegelungselement einen Rückstellmechanismus, insbesondere eine Rückstellfeder, aufweisen.

Ferner weist das Verriegelungselement an jenem dem Drehpunkt zur Seitenwand gegenüberliegenden Ende eine Rastnase auf um mit dem Rasthaken der Seitenwand, insbesondere Längsseitenwand des Transport- und Lagerbehälters, einzugreifen um somit eine Ver- bzw. Entriegelung zu ermöglichen.

In einer Weiterbildung ist vorgesehen, dass die Rastnase im Querschnitt fünfeckig ausgebildet ist, wobei an einer Längsseitenkante eine Auflauffläche in einem stumpfen Winkel angeordnet ist, wodurch ein Ineinanderfügen und Trennen der Rastnase des Verriegelungselements und des Rasthakens der Längsseitenwand erleichtert wird. Weiters ist vorgesehen, dass die gegenüberliegende Längskante eine Sperrfläche bildet, die in einem Winkel von 75 ° bis 89 ° in Bezug auf eine untere Querkante der Rastnase angeordnet ist, wodurch diese bei starker Beanspruchung ohne Bruch öffnet.

Um die Aktivierung des Stellmechanismus für den Anwender angenehm handhabbar auszugestalten, kann das Betätigungselement ergonomisch geformt sein.

Die Rastnase des Verriegelungselements greift in eine komplementäre Ausbildung, insbesondere Rasthaken, der benachbarten Seitenwand, insbesondere Längsseitenwand ein, die durch eine Ausnehmung oder Vorsprünge der benachbarten Seitenwand ausgebildet ist und somit ein einfaches Ent- bzw. Verriegeln möglich wird.

In einer Weiterbildung der komplementären Ausbildung der benachbarten Seitenwand ist vorgesehen, dass eine Auflauffläche, insbesondere schräge Fläche, ausgebildet ist, um das Ver- und Entriegeln der Seitenwände, insbesondere das Einrasten der Rastnase und das nach innen Klappen der Seitenwände zu erleichtern. Weiters ist vorgesehen, dass die Auflauffläche einen Winkel von 35° bis 65° aufweist, womit beim Anlegen der Rastnase an die Schräge der Auflauffläche diese in die komplementäre Ausbildung der Längsseitenwand automatisch einrastet bzw. beim Entriegeln durch die Schrägstellung mehr oder weniger automatisch entriegelt.

Ein Unterstützungselement kann im Bereich der komplementären Ausbildung angeordnet sein, welches als Verstärkungselement bspw. des Rasthakens wirkt und somit die Widerstandskraft der komplementären Ausbildung gegen Bruch erhöht wird.

Um eine gleichmäßige Bewegung des Stellmechanismus zum Ent- und Verriegeln der Schmalseitenwand mit der Längsseitenwand zu erzielen, ist dieser, insbesondere das Betätigungs- und Verriegelungselement, spiegelbildlich zur Mittelachse der Seitenwand angeordnet.

In einer bevorzugten Weiterbildung ist das Betätigungselement im Wesentlichen im Mitteilteil der Seitenwand, insbesondere im Bereich des Griffes der Seitenwand, insbesondere der Schmalseitenwand, angeordnet, wodurch eine gleichmäßige Kraftübertragung sowohl zum linken als auch zum rechten Teil des Stellmechanismus bzw. zur Interaktion der Rastnase mit dem Rasthaken zu erreichen.

In einer bevorzugten Ausführungsvariante ist vorgesehen, dass das Betätigungselement unterhalb des Griffes der Seitenwand angeordnet ist, wodurch beim Fassen des Transport- bzw. Lagerbehälters im Bereich des Griffes die Entriegelung der Schmalseitenwand mit der Längsseitenwand einfach durchgeführt werden kann.

Weiters ist vorgesehen, dass das Rückstellelement sowohl des Betätigungs- als auch des Verriegelungselements mit einem Vorsprung der Seitenwand, insbesondere einer Versteifungsrippe, die als Querrippe ausgebildet ist, interagiert, womit der Stellmechanismus federnd vorgespannt ist und nur ein leichter Druck zum Entriegeln ausgeübt werden muss.

Zum besseren Verständnis der Erfindung wird diese anhand der nachfolgenden Figuren näher erläutert.

Es zeigen jeweils in stark schematisch vereinfachter Darstellung:
- Fig. 1: eine Teilansicht der Schmalseitenwand 4 eines Mehrwegbehälters, wobei die Schmalseitenwand 4 mit der Längsseitenwand verriegelt ist;
- Fig. 2: Teilansicht der Schmalseitenwand 4 eines Mehrwegbehälters, wobei die Schmal- seitenwand 4 von der Längsseitenwand entriegelt ist;
- Fig. 3a: Draufsicht auf einen Teil des Betätigungselements 9;
- Fig. 3b: Seitenansicht auf einen Teil des Betätigungselements 9;
- Fig. 4: Schnittansicht des Betätigungselements 9 aus Fig. 3a;
- Fig. 5a: Draufsicht auf einen Teil des Verriegelungselements 10;
- Fig. 5b: Seitenansicht auf einen Teil des Verriegelungselements 10;
- Fig. 6: Teilansicht eines Schnitts der Längsseitenwand 5 in geschlossenem Zustand;
- Fig. 7: Querschnitt der Rastnase 23.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

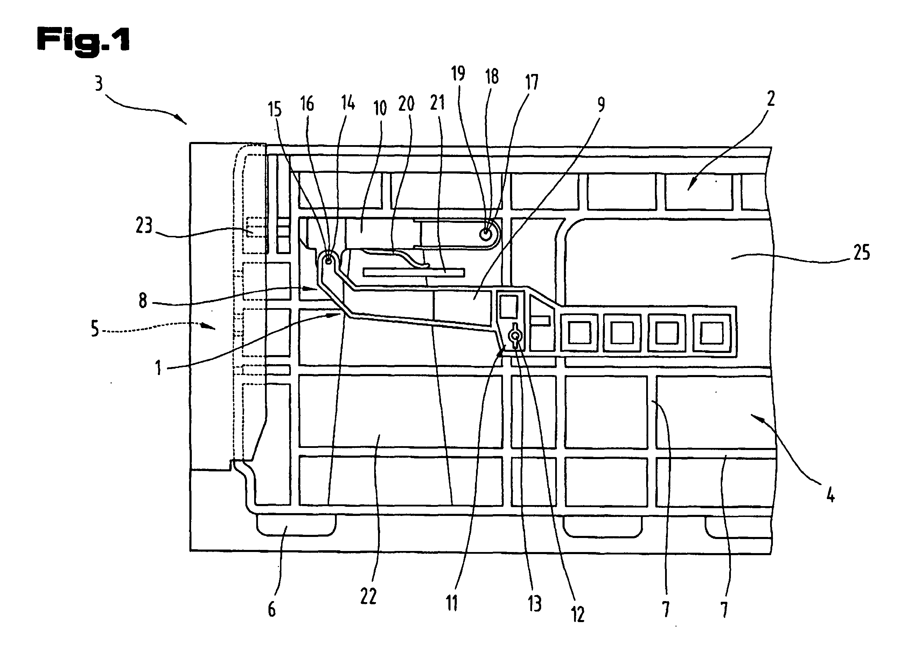

Fig. 1 zeigt eine Teilansicht einer erfindungsgemäßen Vorrichtung 1 zum Öffnen und Verriegeln von klappbaren Seitenwänden 2 eines Transport- und Lagerbehälters 3 in geschlossenem Zustand.

Der Transport- und Lagerbehälter 3 besteht aus insgesamt vier nach innen auf den nicht dargestellten Boden klappbaren Seitenwänden 2, wobei jeweils zwei einander gegenüberliegende Seitenwände 2 Schmalseitenwände 4 und die anderen zwei einander gegenüberliegenden Seitenwände 2 Längsseitenwände 5 bilden. In Fig. 1 ist die Schmalseitenwand 4 von der Außenseite her ersichtlich, sodass die Schmalseitenwand 4 in die Zeichnungsebene hingeklappt werden kann.

Am unteren Ende der Schmalseitenwand 4 sind Scharniere 6 angeformt, welche als Filmscharniere oder als Gelenkscharniere ausgebildet sein können. Über diese Scharniere 6 wird die Schmalseitenwand 4 mit dem Behälterboden verbunden. An der linken Seite ist die Längsseitenwand 5 angeordnet und mit der Schmalseitenwand 1 wie nachfolgend näher beschrieben, verriegelt. Auch die Längsseitenwand 5 ist an ihrem unteren Rand mit entsprechenden Scharnieren 6 mit dem Behälterboden verbunden. Die Verbindung der Schmalseitenwand 4 bzw. der Längsseitenwand 5 mit dem Behälterboden über Scharniere ist aus dem Stand der Technik bereits hinlänglich bekannt.

An der Außenfläche der mit horizontalen und vertikalen vorspringenden Versteifungsrippen 7 versehenen Schmalseitenwand 4 ist der erfindungsgemäße Stellmechanismus 8 angeordnet, welcher das Betätigungselement 9 und das Verriegelungselement 10 umfasst. Dieser sich im wesentlichen über die gesamte Länge der Schmalseitenwand 4 erstreckende Stellmechanismus 8 von dem jedoch nur die linke Hälfte dargestellt ist, ist mit der Schmalseitenwand 4 verbunden. Die Verbindung des Stellmechanismus 8, insbesondere des Betätigungselements 9 mit der Schmalseitenwand 4 erfolgt vorzugsweise über eine Pilz-Schlitzverbindung 11, wobei der Pilz, insbesondere in Form eines Zapfens 12 in die Ausnehmung 13 der Schmalseitenwand 4 eingreift. Die Ausnehmung 13 der Schmalseitenwand weist eine entsprechende Form auf, womit es dem Zapfen 12 des Betätigungselements 9 lediglich möglich ist sich in vertikaler Richtung zu bewegen. Es ist auch möglich den Pilz in der Seitenwand 2 und den Schlitz im Betätigungselement 9 anzuordnen.

Das Betätigungselement 9 kann ebenfalls Versteifungsrippen 7 aufweisen, um somit einer höheren mechanischen Beanspruchung Stand zu halten. Vorzugsweise wird das Betätigungselement 9 durch eine Druckbewegung parallel zur Seitenwand 2 nach unten gedrückt, wobei die Parallelführung des Betätigungselements 9 durch die Pilz-Schlitzverbindung 11 vorgegeben ist.

Das Betätigungselement 9 weist an seinen beiden distalen Enden jeweils einen Drehpunkt 14 auf, der sowohl mit dem linken als auch dem rechten Verriegelungselement 10 interagiert. Der Drehpunkt 14 des Betätigungselements 9 wird vorzugsweise durch eine Ausnehmung 15 gebildet, um mit dem Zapfen 16 des Verriegelungselements 10 zu interagieren um somit eine Vertikalbewegung in eine Dreh- bzw. Schwenkbewegung umzuwandeln.

Das Verriegelungselement 10 ist über einen weiteren Drehpunkt 17 mit der Schmalseitenwand 4 verbunden. Hier befindet sich vorzugsweise der Zapfen 18 am Verriegelungselement 10 und die komplementäre Ausnehmung 19 hierzu an der Schmalseitenwand 4. Die Anordnung des Zapfens 16, 18 und der jeweils zugeordneten Ausnehmung 15, 19 kann auch am jeweils anderen Bauteil angeordnet sein.

Weiters ist am Verriegelungselement 10 ein Rückstellmechanismus, insbesondere eine Rückstellfeder 20, angeordnet, welche mit einem Vorsprung 21, welcher vorzugsweise in horizontaler Richtung an der Schmalseitenwand 4 angeordnet ist, zusammen wirkt.

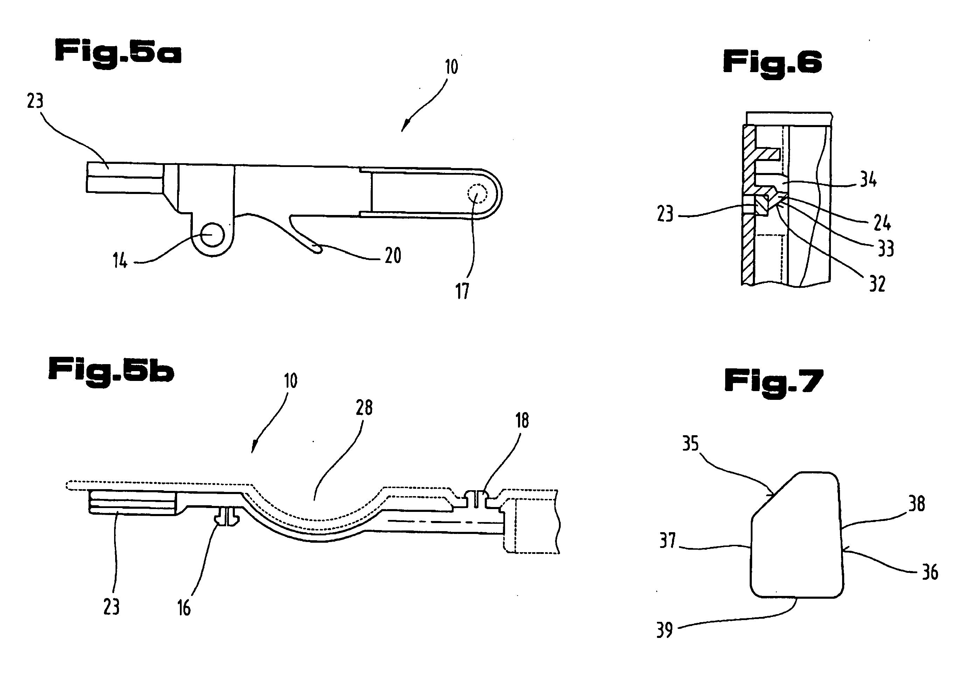

Die Schmalseitenwand 4 kann wie in Fig. 1 dargestellt, eine Ausbuchtung 22 aufweisen. An jenem dem Drehpunkt 17 des Verriegelungselements 10 mit der Seitenwand 4 gegenüber liegenden Ende des Verriegelungselements 10 ist eine Rastnase 23 angeordnet. Die Rastnase 23 des Stellmechanismus 8 interagiert mit der annähernd komplementären Ausbildung, wie z.B. Rasthaken 24, der Längsseitenwand 5, die in Fig. 6 im Schnitt dargestellt ist.

Das Ausmaß der Druckbewegung des Betätigungsteils 9 nach unten beträgt 0,5 cm bis 10 cm abhängig von den Abmessungen des Transport- bzw. Lagerbehälters 3.

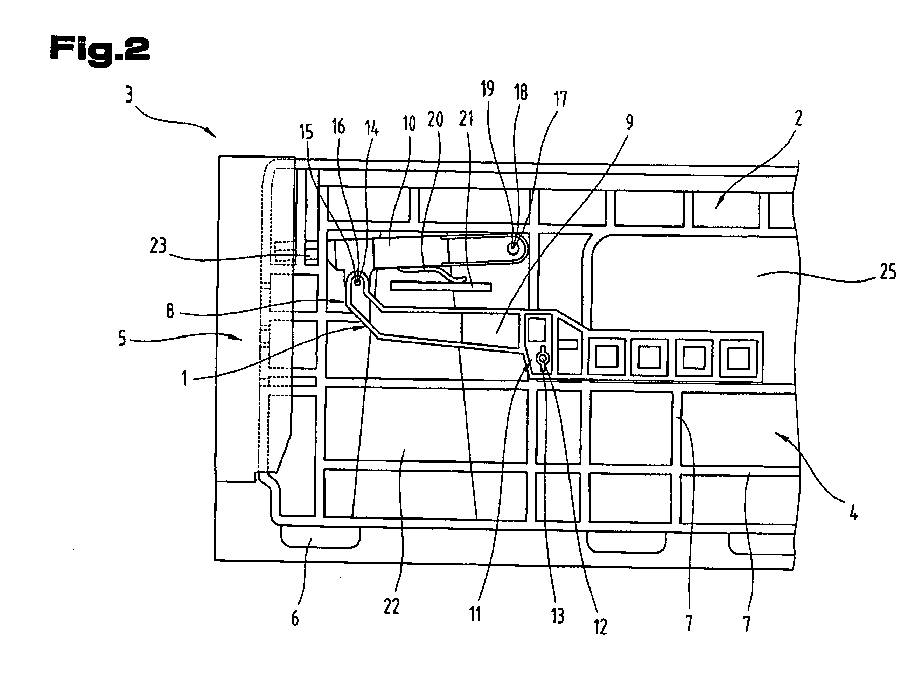

In Fig. 2 ist der Stellmechanismus 8 in entriegeltem Zustand dargestellt. Hierbei ist das Betätigungselement 9 nach unten gedrückt, wodurch über den Drehpunkt 14, welcher die Verbindung des Betätigungselements 9 mit dem Verriegelungselement 10 darstellt, die Rastnase 23 nach unten gedrückt wird und somit ein Entriegeln der Rastnase 23 der Schmalseiten 4 vom Rasthaken 24 der Längsseitenwand 5 ermöglicht wird. Über die Rückstellfeder 20 gelangt das Verriegelungselement 10 wiederum in die Ausgangsposition.

Wie aus Fig. 1 und 2 hervorgeht, ist der Stellmechanismus 8 im Wesentlichen im Mittelteil der Seitenwand, insbesondere der Schmalseitenwand 4 im Bereich des Griffes 25 angeordnet. Das Verriegelungselement 10 ist über den Drehpunkt 17 jeweils spiegelbildlich an der Schmalseitenwand 4 befestigt.

Die Rückstellfeder 20 ist vorzugsweise annähernd zentral am Verriegelungselement 10 an dessen unterem Ende angeordnet.

In einer bevorzugten Ausführungsform bildet die Rastnase 23 eine Verjüngung in Bezug auf das Verriegelungselement 10.

Zum Zwecke des Entriegelns und damit des Einklappens der Schmalseitenwände 4, wird das Betätigungselement 9 im Bereich des Griffes 25 nach unten gerückt, sodass über den Drehpunkt 14 das Verriegelungselement 10 an seinem dem Drehpunkt 17 gegenüber angeordneten Ende, also Rastnase 23, gegenüber dem in der Längsseitenwand 5 angeordneten Rasthaken 24 nach unten geführt wird und dann die damit entriegelte Schmalseitenwand 4 gleichzeitig nach innen geklappt werden kann.

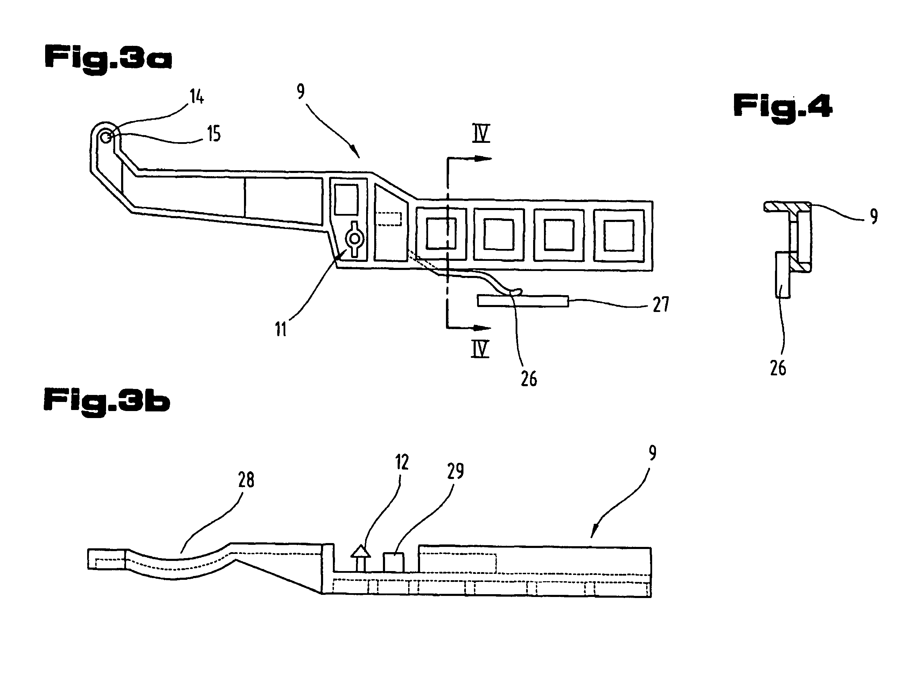

Fig. 3a zeigt das Betätigungselement 9 in Draufsicht in Alleindarstellung, wobei lediglich die linke Hälfte des Betätigungselements 9 dargestellt ist. Um eine Rückführung des Betätigungselements 9 in die Ausgangsstellung zu bewerkstelligen, ist eine Rückstellfeder 26 am unteren Ende des Betätigungselements 9 angeordnet, die mit einer Querrippe 27 der Schmalseitenwand 4 interagiert. Somit muss beim Hinunterdrücken des Betätigungselements 9 lediglich die Kraft, die durch die Rückstellfeder 26, 20 hervorgerufen wird, überwunden werden, um eine Entriegelung der Schmalseitenwand 4 von der Längsseitenwand 5 zu erzielen.

In Fig. 3b ist die Seitenansicht des Betätigungselements 9 dargestellt. Es ist der Zapfen 12, der Pilz-Schlitzverbindung 11 zu erkennen. Weiters ist eine Freistellung 28 für eine Ausbuchtung 22 der Schmalseitenwand 4 dargestellt. Neben dem Zapfen 12 der Pilz-Schlitzverbindung 11 kann ein weiterer Vorsprung 29 angeordnet sein, der mit einer Ausnehmung der Schmalseitenwand 4 interagiert und somit eine zusätzliche Führung des Betätigungselementes 9 parallel zur Schmalseitenwand 4 bewirkt.

Fig. 4 zeigt einen Schnitt durch das Betätigungselement 9, wobei die Rückstellfeder 26 und Verstrebungen 30 bzw. Rippen 31 des Betätigungselements in Schnitt gezeigt werden. Fig. 5a und 5b zeigen das Verriegelungselement 10 in Alleindarstellung, wobei lediglich der linke Teil des Stellmechanismus 8 dargestellt ist. In Fig. 5a ist das Verriegelungselement 10 in Draufsicht und in Fig. 5b in Seitenansicht dargestellt. Die Verbindung des Verriegelungselements 10 mit dem Betätigungselement 9 wird über den Drehpunkt 14 gebildet, wobei der Zapfen 16 am Verriegelungselement 10 angeordnet ist und mit der Ausnehmung 15 des Betätigungselements 9 interagiert. Die Verbindung des Verriegelungselements 10 mit der Schmalseitenwand 4 erfolgt ebenfalls über einen Drehpunkt 17, wobei der Zapfen 18 wiederum am Verriegelungselement 10 angeordnet ist und die Ausnehmung 19 an der Schmalseitenwand gebildet ist. An jenem dem Drehpunkt 17 gegenüberliegenden Ende des Verriegelungselements 10 ist die Rastnase 23, welche mit einer komplementären Ausbildung, z.B. dem Rasthaken 24, der Längsseitenwand 5 interagiert, angeordnet.

In Fig. 5B ist die Anordnung der Zapfen 16 und 18 an jeweils der gegenüberliegenden Seite des Verriegelungselements 10 dargestellt, wobei der Zapfen 16, welcher mit der Ausnehmung 15 des Betätigungselements 9 interagiert an der Außenseite des Verriegelungselements 10 angeordnet ist und der Zapfen 18, welcher mit der Ausnehmung 19 der Schmalseitenwand 4 interagiert an der Innenseite des Verriegelungselements 10 gebildet ist. Diese Anordnung ist jedoch optional und kann bei Bedarf auch nur auf der Innen- oder nur auf der Außenseite oder auch umgekehrt ausgebildet sein. Weiters ist in Fig. 5b die Freistellung 28, welche parallel zur Ausbuchtung 22 der Schmalseitenwand 4 ausgebildet ist, gezeigt.

Fig. 6 zeigt einen Schnitt der Längswand 5 im geschlossenen Zustand des Transport- und Lagerbehälters 3. Die Rastnase 23 des Verriegelungselements 10, welche hier nur schematisch im Querschnitt dargestellt ist, greift in den Rasthaken 24 der Längsseitenwand 5 ein. Der Rasthaken 24 der Längsseitenwand 5 kann eine Auflauffläche 32 aufweisen, wodurch das Ent- bzw. Verriegeln der Rastnase 23 mit dem Rasthaken 24 erleichtert wird und die Einrastung kann z.B. ohne Betätigung des Betätigungselements 9 erfolgen. Durch die Schrägstellung 33 der Auflauffläche 32 kann bei der Entriegelung der Rastnase 23 vom Rasthaken 24 die Rastnase 23 entlang der Auflauffläche 32 gleiten. Ebenso kann beim Verriegeln der Schmalseitenwand 4 mit der Längsseitenwand 5 die Rastnase 23 entlang der Schrägstellung 33 der Auflauffläche 32 des Rasthaken 24 entlang gleiten, um so in der Endposition einzurasten. Weiters kann, wie in Fig. 6 dargestellt, der Rasthaken 24 ein Unterstützungselement 34 aufweisen, um so die mechanische Belastbarkeit des Rasthakens 24 zu verbessern.

Fig. 7 zeigt einen Querschnitt der Rastnase 23 des Verriegelungselements 10. Komplementär zur Schrägstellung 33 der Auflauffläche 32 des Rasthakens 24 zeigt die Rastnase 23 ebenfalls eine Auflauffläche 35, welche einen Winkel zwischen 35° und 56°aufweist. Beim Entriegeln und Verriegeln der Schmalseitenwand 4 mit der Längsseitenwand 5 gleiten die beiden Auflaufflächen 32, 35 aneinander und somit wird die Ent- bzw. Verriegelung erleichtert. Ferner ist in Fig. 7 dargestellt, dass die Rastnase 23 eine Sperrfläche 36 mit einer Sicherheitsschräge aufweist, welche bei starker Beanspruchung ohne Bruch öffnet. Die beiden Längskanten 37 und 38 der Rastnase 23 sind nicht parallel zueinander angeordnet, sondern vielmehr bildet die Längskante 38, welche der Längskante 37, welche an ihrem oberen Ende in die Auflauffläche 35 übergeht, einen Winkel von 70° bis 89° in Bezug auf die untere Querkante 39.

Selbstverständlich sind weitere Ausgestaltungen möglich. Je nach Breite der Schmalseitenwand 4 kann der Stellmechanismus 8, insbesondere das Betätigungselement 9 auch zweiteilig ausgeführt sein, wobei jeweils ein Betätigungselement 9 der linken und ein weiteres Betätigungselement 9 der rechten Seite, insbesondere dem Verriegelungselement 10 zugeordnet ist.

Auch ist es möglich, dass der Stellmechanismus 8 unterschiedlich in Bezug auf den Griff 25 angeordnet wird, wie zum Beispiel weiter unterhalb des unteren Randes der Grifföffnung oder auch oberhalb des Griffes 25.

Die Ausführungsbeispiele zeigen mögliche Ausführungsvarianten der Vorrichtung zum Öffnen und Verriegeln von klappbaren Seitenwänden eines Transport- bzw. Lagerbehälters, insbesondere Mehrwegbehälter, bzw. des Transport- bzw. Lagerbehälters per se wobei an dieser Stelle bemerkt sei, dass die Erfindung nicht auf die speziell dargestellten Ausfuhrungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

In der Fig. 3, 4, 5, 6 und 7 ist eine weitere und gegebenenfalls für sich eigenständige Ausführungsform bzw. Weiterbildung der Vorrichtung zum Öffnen und Verriegeln von klappbaren Seitenwänden eines Transport- bzw. Lagerbehälters, insbesondere Mehrwegbehälter gezeigt, wobei wiederum für gleiche Teile gleiche Bezugszeichen bzw. Bauteilbezeichnungen wie in den vorangegangenen Fig. verwendet werden. Um unnötige Wiederholungen zu vermeiden, wird auf die detaillierte Beschreibung in den vorangegangenen Fig. hingewiesen bzw. Bezug genommen.

Der Ordnung halber sei abschließend darauf hingewiesen, dass zum besseren Verständnis des Aufbaus der Vorrichtung zum Öffnen und Verriegeln von klappbaren Seitenwänden eines Transport- bzw. Lagerbehälters, insbesondere Mehrwegbehälter, bzw. des Transport- bzw. Lagerbehälters per se diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 3a, 3b und 5a, 5b gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Vorrichtung
- 2: Seitenwand
- 3: Transport- und Lagerbehälter
- 4: Schmalseitenwand
- 5: Längsseitenwand

- 6: Scharniere
- 7: Versteifungsrippen
- 8: Stellmechanismus
- 9: Betätigungselement
- 10: Verriegelungselement

- 11: Pilz-Schlitzverbindung
- 12: Zapfen
- 13: Ausnehmung
- 14: Drehpunkt
- 15: Ausnehmung

- 16: Zapfen
- 17: Drehpunkt
- 18: Zapfen
- 19: Ausnehmung
- 20: Rückstellfeder

- 21: Vorsprung
- 22: Ausbuchtung
- 23: Rastnase
- 24: Rasthaken
- 25: Griff

- 26: Rückstellfeder
- 27: Querrippe
- 28: Freistellung
- 29: Vorsprung
- 30: Verstrebung

- 31: Rippen
- 32: Auflauffläche
- 33: Schrägstellung
- 34: Unterstützungselement
- 35: Auflauffläche

- 36: Sperrfläche
- 37: Längskante li
- 38: Längskante re
- 39: Querkante unten

## Patentansprüche

1. Vorrichtung (1) zum Öffnen und Verriegeln von klappbaren Seitenwänden (2) eines Transport- und Lagerbehälters (3), insbesondere Mehrwegbehälter, mit vier auf den Behälterboden klappbaren Seitenwänden (2), wobei zwei gegenüberliegende Seitenwände (2), insbesondere Schmalseitenwände (4), durch Rastnasen (23) lösbar mit den beiden anderen Seitenwänden (2), insbesondere Längsseitenwänden (5), verriegelbar sind, indem die Rastnasen (23) in entsprechende Rasthaken (24) an den beiden anderen Seitenwänden (2) eingreifen, wobei für die Verriegelungs- und Entriegelungsbewegung ein Stellmechanismus (8) angeordnet ist, der die Interaktion zwischen Rastnase (23) und Rasthaken (24) derart löst, dass die entsprechende Seitenwand (2) entriegelt und nach innen klappbar ist, wobei der Stellmechanismus (8) ein Betätigungs- (9) und einen Verriegelungselement (10) umfasst, die miteinander verbunden sind, womit eine vertikale Bewegung des Betätigungselements (9) in eine Dreh- bzw. Schwenkbewegung des Verriegelungselements (10) umgewandelt wird um die Seitenwände (2) zu entriegeln
**dadurch gekennzeichnet, dass**
das Verriegelungselement (10) an einem ersten Ende über einen Drehpunkt (17) mit der Seitenwand (4) verbunden ist, und an einem zweiten, dem ersten Ende gegenüberliegenden Ende die Rastnase (23) aufweist, und
das Betätigungselement (9) und das Verriegelungselement (10) im wesentlichen parallel zueinander angeordnet sind und über einen weiteren Drehpunkt (14) benachbart zu der anderen Seitenwand (5) derart verbunden sind, dass das Verriegelungselement (10) bei einer Bewegung des Betätigungselements (9) nach unten über den weiteren Drehpunkt (14) an seinem zweiten Ende nach unten geführt wird.

2. Vorrichtung (1) nach Anspruch 1, **dadurch gekennzeichnet, dass** der Stellmechanismus (8), insbesondere das Betätigungselement (9), über eine Pilz-Schlitzverbindung (11) mit der Seitenwand (2) verbunden ist.

3. Vorrichtung (1) nach Anspruch 1 oder 2, **dadurch gekennzeichnet, dass** das Betätigungselement (9) über einen Drehpunkt (14) mit dem Verriegelungselement (10) interagiert und gegebenenfalls der Drehpunkt (14) des Betätigungselements (9) durch eine Ausnehmung (15) im Betätigungselement (9) ausgebildet ist.

4. Vorrichtung (1) nach einem der Ansprüche 1 bis 3, **dadurch gekennzeichnet, dass** das Betätigungselement (9) eine Freistellung für die Aufnahme einer Ausbuchtung (22) der Seitenwand (2) aufweist und/oder einen Vorsprung (29) für die Parallelführung des Betätigungselement (9) zur Seitenwand (2) aufweist.

5. Vorrichtung (1) nach einem der Ansprüche 1 bis 4, **dadurch gekennzeichnet, dass** das Verriegelungselement (10) zumindest einen Zapfen (16) zur Interaktion mit dem Drehpunkt (14), insbesondere der Ausnehmung (15) des Betätigungselements (9) und gegebenenfalls zumindest einen weiteren Zapfen (18) zur Interaktion mit der Seitenwand (2) aufweist.

6. Vorrichtung (1) nach einem der Ansprüche 1 bis 5, **dadurch gekennzeichnet, dass** das Verriegelungselement (10) eine Freistellung (28) für die Aufnahme der Ausbuchtung (22) der Seitenwand (2) aufweist.

7. Vorrichtung (1) nach einem der Ansprüche 1 bis 6, **dadurch gekennzeichnet, dass** das Verriegelungselement (10) einen Rückstellmechanismus, insbesondere eine Rückstellfeder (26), aufweist, die eine Rückführung des Verriegelungselements (10) in die Ausgangsposition bewirkt bzw. das Betätigungselement (9) ein Rückstellelement, insbesondere eine Rückstellfeder (20), aufweist, die eine Rückführung des Betätigungselements (9) in die Ausgangsposition bewirkt.

8. Vorrichtung (1) nach einem der Ansprüche 1 bis 7, **dadurch gekennzeichnet, dass** das Verriegelungselement (10) an jenem dem Drehpunkt (17) zur Seitenwand (2) gegenüberliegenden Ende die Rastnase (23) aufweist.

9. Vorrichtung (1) nach einem der Ansprüche 1 bis 8, **dadurch gekennzeichnet, dass** die Rastnase (23) im Querschnitt fünfeckig ausgebildet ist, wobei an einer Längsseitenkante (37) eine Auflauffläche (35) in einem stumpfen Winkel angeordnet ist, und die gegenüberliegende Längskante (38) eine Sperrfläche (36) bildet, die in einem Winkel von 75° bis 89° in Bezug auf eine untere Querkante (39) der Rastnase (23) angeordnet ist.

10. Vorrichtung (1) nach einem der Ansprüche 1 bis 9, **dadurch gekennzeichnet, dass** die Rastnase (23) des Verriegelungselements (10) in eine komplementäre Ausbildung, insbesondere Rasthaken (24), der benachbarten Seitenwand (2), insbesondere Längsseitenwand (5), eingreift und die Ausbildung durch eine Ausnehmung oder Vorsprünge der benachbarten Seitenwand (2) gebildet ist und eine Auflauffläche (32), insbesondere schräge Fläche, vorzugsweise einen Winkel von 35° bis 65° in Bezug auf die Horizontalebene, aufweist, um das Ver- und Entriegeln der Seitenwände (2), insbesondere das Ein- und Entrasten der Rastnase (23) zu erleichtern.

11. Vorrichtung (1) nach Anspruch 10, **dadurch gekennzeichnet, dass** ein Unterstützungselement (34) im Bereich der komplementären Ausbildung angeordnet ist.

12. Transport- und Lagerbehälter (3), insbesondere Mehrwegbehälter, mit vier auf den Behälterboden klappbaren Seitenwänden (2) und einer Vorrichtung (1) zum Öffnen und Verriegeln der klappbaren Seitenwänden (2) nach einem der Ansprüche 1 bis 11

13. Transport- und Lagerbehälter (3) nach Anspruch 12, **dadurch gekennzeichnet, dass** der Stellmechanismus (8), insbesondere das Betätigungs- (9) und Verriegelungselement (10), spiegelbildlich zur Mittelachse der Seitenwand (2) angeordnet ist und gegebenenfalls das Betätigungselement (9) im wesentlichen im Mittelteil der Seitenwand (2), insbesondere im Bereich eines Griffes (25) der Seitenwand (2) oder unterhalb des Griffes (25) der Seitenwand (2) angeordnet ist.

14. Transport- und Lagerbehälter (3) nach Anspruch 12 oder 13, **dadurch gekennzeichnet, dass** das Rückstellelement des Betätigungs- (9) und Verriegelungselements (10) mit einem Vorsprung der Seitenwand (2), insbesondere einer Querrippe (27), interagiert.

## Claims

1. A device (1) for opening and locking folding side walls (2) of a transport and storage container (3), in particular a reusable container, with four side walls (2) which can be folded onto the container base, wherein two opposing side walls (2), in particular narrow side walls (4), can be locked releasably by latching lugs (23) to the two other side walls (2), in particular long side walls (5), by engagement of the latching lugs (23) in corresponding latching hooks (24) on the two other side walls (2), wherein for the locking and unlocking movement, an operating mechanism (8) is provided which releases the interaction between the latching lug (23) and the latching hook (24) in such a manner that the corresponding side wall (2) is unlocked and can be folded inwards, wherein the operating mechanism (8) comprises an actuating element (9) and a locking element (10) connected to one another, whereby a vertical movement of the actuating element (9) is converted into a rotating or tilting movement of the locking element (10) for unlocking the side walls (2),
**characterized in that**
the locking element (10) is connected to the side wall (4) at a first end via a centre of rotation (17) and comprises the latching lug (23) at a second end opposing the first end, and
the actuating element (9) and the locking element (10) are arranged substantially in parallel to one another and are connected via a further centre of rotation (14) adjacent to the other side wall (5) in such a manner that the locking element (10) is guided downwards at its second end during a downward movement of the actuating element (9) via the further center of rotation (14).

2. The device (1) according to claim 1, **characterized in that** the operating mechanism (8), in particular the actuating element (9), is connected by means of a mushroom and slot connection (11) to the side wall (2).

3. The device (1) according to claim 1 or 2, **characterized in that** the actuating element (9) interacts with the locking element (10) via a centre of rotation (14), and optionally the centre of rotation (14) of the actuating element (9) is formed by a recess (15) in the actuating element (9).

4. The device (1) according to any one of claims 1 to 3, **characterized in that** the actuating element (9) comprises a depression for receiving a protrusion (22) of the side wall (2) and/or a projection (29) for the parallel guiding of the actuating element (9) relative to the side wall (2).

5. The device (1) according to any one of claims 1 to 4, **characterized in that** the locking element (10) has at least one lug (16) for interaction with the centre of rotation (14), in particular with the recess (15) of the actuating element (9), and optionally at least one further lug (18) for interaction with the side wall (2).

6. The device (1) according to any one of claims 1 to 5, **characterized in that** the locking element (10) comprises a depression (28) for receiving the protrusion (22) of the side wall (2).

7. The device (1) according to any one of claims 1 to 6, **characterized in that** the locking element (10) comprises a return mechanism, in particular a return spring (26), which effects a return of the locking element (10) into the initial position, or the actuating element (9) comprises a return element, in particular a return spring (20), which effects a return of the actuating element (9) into the initial position.

8. The device (1) according to any of claims 1 to 7, **characterized in that** the locking element (10) comprises the latching lug (23) on the end opposite the centre of rotation (17) relative to the side wall (2).

9. The device (1) according to any of claims 1 to 8, **characterized in that** the latching lug (23) is pentagonal in cross-section, wherein a guide surface (35) is disposed at an obtuse angle on a long side edge (37), and the opposing long edge (38) forms a blocking surface (36) which is disposed at an angle of 75° to 89° relative to a lower transverse edge (39) of the latching lug (23).

10. The device (1) according to any one of claims 1 to 9, **characterized in that** the latching lug (23) of the locking element (10) engages in a complementary structure, in particular a latching hook (24), of the neighbouring side wall (2), in particular a long side wall (5), and the structure is formed by a recess or projections on the neighbouring side wall (2) and has a guide surface (32), in particular an oblique surface, preferably at an angle of 35° to 65° in relation to the horizontal plane, in order to facilitate locking and unlocking of the side walls (2), in particular latching and unlatching of the latching lug (23).

11. The device according to claim 10, **characterized in that** a support element (34) is disposed in the region of the complementary structure.

12. A transport and storage container (3), in particular a reusable container, with four side walls (2) which can be folded onto the container base and a device (1) for opening and locking the folding side walls (2) according to any one of claims 1 to 11.

13. The transport and storage container (3) according to claim 12, **characterized in that** the operating mechanism (8), in particular the actuating (9) and locking element (10), is disposed in mirror image with respect to the central axis of the side wall (2) and optionally the actuating element (9) is disposed substantially in the central part of the side wall (2), in particular in the region of a handle (25) of the side wall (2) or below the handle (25) of the side wall (2).

14. The transport and storage container (3) according to claim 12 or claim 13, **characterized in that** the return element of the actuating element (9) and locking element (10) interacts with a projection of the side wall (2), in particular a transverse rib (27).

## Revendications

1. Dispositif (1) pour ouvrir et verrouiller des parois latérales rabattables (2) d'un conteneur de transport et de stockage (3), en particulier d'un conteneur à usage multiple, avec quatre parois latérales rabattables sur le fond de conteneur (2), deux parois latérales opposées (2), en particulier parois latérales étroites (4), pouvant être verrouillées de manière amovible, à l'aide de doigts d'encliquetage (23), avec les deux autres parois latérales (2), en particulier parois latérales longitudinales (5), en ce que les doigts d'encliquetage (23) s'engagent dans des crochets d'encliquetage (24) correspondants aux deux autres parois latérales (2), pour le mouvement de verrouillage et déverrouillage étant disposé un mécanisme de réglage (8) qui défait l'interaction entre le doigt d'encliquetage (23) et le crochet d'encliquetage (24) de sorte que la paroi latérale correspondante (2) soit déverrouillée et rabattable vers l'intérieur, le mécanisme de réglage (8) comportant un élément d'actionnement (9) et un élément de verrouillage (10), qui sont connectés l'un à l'autre, par lesquels un mouvement vertical de l'élément d'actionnement (9) est converti en un mouvement de rotation ou pivotement de l'élément, pour déverrouiller les parois latérales (2),
**caractérisé par le fait que**
l'élément de verrouillage (10) est relié, à une première extrémité, par l'intermédiaire d'un point de rotation (17), à la paroi latérale (4), et présente, à une deuxième extrémité opposée à la première extrémité, le doigt d'encliquetage (23), et
l'élément d'actionnement (9) et l'élément de verrouillage (10) sont disposés sensiblement parallèles l'un à l'autre et sont reliés, par l'intermédiaire d'un autre point de rotation (14) adjacent à l'autre paroi latérale (5), de sorte que l'élément de verrouillage (10) soit, lors d'un mouvement de l'élément d'actionnement (9) vers le bas, par l'intermédiaire de l'autre point de rotation (14), guidé à sa deuxième extrémité vers le bas.

2. Dispositif (1) selon la revendication 1, **caractérisé par le fait que** le mécanisme de réglage (8), en particulier l'élément d'actionnement (9), est relié, par l'intermédiaire d'une connexion champignon-fente (11), à la paroi latérale (2).

3. Dispositif (1) selon la revendication 1 ou 2, **caractérisé par le fait que** l'élément d'actionnement (9) interagit, par l'intermédiaire d'un point de rotation (14), avec l'élément de verrouillage (10) et que, éventuellement, le point de rotation (14) de l'élément d'actionnement (9) est réalisé par un évidement (15) dans l'élément d'actionnement (9).

4. Dispositif (1) selon l'une des revendications 1 à 3, **caractérisé par le fait que** l'élément d'actionnement (9) présente un dégagement destiné à recevoir un bombage (22) de la paroi latérale (2) et/ou une saillie (29) pour le guidage en parallèle de l'élément d'actionnement (9) par rapport à la paroi latérale (2).

5. Dispositif (1) selon l'une des revendications 1 à 4, **caractérisé par le fait que** l'élément de verrouillage (10) présente au moins un tourillon (16) en vue de l'interaction avec le point de rotation (14), en particulier l'évidement (15) de l'élément d'actionnement (9) et éventuellement au moins un autre tourillon (18) en vue de l'interaction avec la paroi latérale (2).

6. Dispositif (1) selon l'une des revendications 1 à 5, **caractérisé par le fait que** l'élément de verrouillage (10) présente un dégagement (28) destiné à recevoir le bombage (22) de la paroi latérale (2).

7. Dispositif (1) selon l'une des revendications 1 à 6, **caractérisé par le fait que** l'élément de verrouillage (10) présente un mécanisme de rappel, en particulier un ressort de rappel (26), qui entraîne un retour de l'élément de verrouillage (10) dans la position de départ ou que l'élément d'actionnement (9) présente un mécanisme de rappel, en particulier un ressort de rappel (20), qui entraîne un retour de l'élément de d'actionnement (9) dans la position de départ.

8. Dispositif (1) selon l'une des revendications 1 à 7, **caractérisé par le fait que** l'élément de verrouillage (10) présente, à l'extrémité opposée au point de rotation (17) vers la paroi latérale (2), le doigt d'encliquetage (23).

9. Dispositif (1) selon l'une des revendications 1 à 8, **caractérisé par le fait que** le doigt d'encliquetage (23) est réalisé à section pentagonale, une face inclinée (35) étant disposée selon un angle obtus sur un bord latéral longitudinal (37), et le bord longitudinal opposé (38) constituant une face d'arrêt (36) qui est disposée selon un angle de 75° à 89° par rapport à un bord transversal inférieur (39) du doigt d'encliquetage (23).

10. Dispositif (1) selon l'une des revendications 1 à 9, **caractérisé par le fait que** le doigt d'encliquetage (23) de l'élément de verrouillage (10) s'engage dans une réalisation complémentaire, en particulier un crochet d'encliquetage (24), de la paroi latérale (2), en particulier paroi latérale longitudinale (5), adjacente et que la réalisation est constituée par un évidement ou une saillie de la paroi latérale (2) adjacente et qu'une face inclinée (32), en particulier face oblique, présente de préférence un angle de 35° à 65° par rapport au plan horizontal, pour faciliter le verrouillage et le déverrouillage des parois latérales (2), en particulier l'encliquetage et le décliquetage du doigt d'encliquetage (23).

11. Dispositif (1) selon la revendication 10, **caractérisé par le fait qu'**un élément de support (34) est disposé à l'endroit de la réalisation complémentaire.

12. Conteneur de transport et de stockage (3), en particulier conteneur à usage multiple, avec quatre parois latérales (2) rabattables sur le fond de conteneur et un dispositif (1) pour ouvrir et verrouiller les parois latérales rabattables (2) selon l'une des revendications 1 à 11.

13. Conteneur de transport et de stockage (3) selon la revendication 12, **caractérisé par le fait que** le mécanisme de réglage (8), en particulier l'élément d'actionnement (9) et l'élément de verrouillage (10), est disposé en image-miroir par rapport à l'axe central de la paroi latérale (2) et que, éventuellement, l'élément d'actionnement (9) est disposé sensiblement dans la partie centrale de la paroi latérale (2), en particulier à l'endroit d'une poignée (25) de la paroi latérale (2) ou au-dessous de la poignée (25) de la paroi latérale (2).

14. Conteneur de transport et de stockage (3) selon la revendication 12 ou 13, **caractérisé par le fait que** l'élément de rappel de l'élément d'actionnement (9) et de l'élément de verrouillage (10) interagit avec une saillie de la paroi latérale (2), en particulier une nervure transversale (27).
